# EUROPEAN PATENT SPECIFICATION

(11) **EP 4 440 826 B1**
(45) Date of publication and mention of the grant of the patent: **04.02.2026**
(21) Application number: 22901920.3
(22) Date of filing: 21.11.2022
(51) Int. Cl.: B29D 30/66, B60C 11/16

(54) **A STUDDING TOOL, A STUDDING UNIT COMPRISING SUCH STUDDING TOOL, AND A STUDDING ASSEMBLY**
BOLZENSETZGERÄT, BOLZENSETZGERÄT MIT EINEM SOLCHEN BOLZENSETZGERÄT UND BOLZENSETZGERÄT
OUTIL DE CLOUTAGE, UNITÉ DE CLOUTAGE COMPRENANT UN TEL OUTIL DE CLOUTAGE ET ENSEMBLE DE CLOUTAGE

(30) Priority: 30.11.2021 SE 2151460
(43) Date of publication of application: 09.10.2024
(73) Proprietor: Klöfver S. AB, 331 72 Forsheda (SE)
(72) Inventor: JÖNSSON, Peter, 331 72 Forsheda (SE)
(74) Representative: Bergenstråhle & Partners AB
(86) International application number: PCT/SE2022/051082
(87) International publication number: WO 2023/101590

(56) References cited:
- EP-A1- 3 357 676
- EP-A1- 3 357 676
- EP-A1- 3 421 266
- EP-A1- 3 421 266
- WO-A1-00/78564
- CN-B- 102 427 958
- US-A- 3 488 826
- US-A- 3 618 194

## Description

### Technical field

The present invention relates to a studding tool for studding tires, preferably air-filled vehicle tires, and a studding unit comprising the studding tool, and which further comprises an adapter for quick connection of the studding tool to the studding unit.

### Background art

It is well known to use tires with antiskid studs to improve grip on icy or snowy road, ground or other surfaces. When providing a tire with studs, the studs are normally inserted into a vulcanized tire which has pre-formed recesses for the studs. These recesses or "stud holes" are oriented in the tire in different positions on the tread of the tire, and normally optical "scanning" is used to locate the stud holes by spinning the tire when the tire is setup in a studding machine. After locating the stud holes at the tread of the tire, the information is used to control/set up the positions of the holes to be able to insert studs into the holes by setting one or more studding units, which each comprise a studding tool (also known as stud pistols, spike guns), in different positions and angles across the width of the tread of the tire. The studding unit often is a pneumatic tool which causes a reciprocating motion of a pusher of the studding tool to drive antiskid studs into the holes of the tire. By spinning the tire in the complete studding machine, and simultaneously insert studs into the predetermined positions by the studding tool/tools, the tire is provided with studs at the predetermined positions.

Known solutions for driving antiskid studs into stud holes of a tread of a pneumatic tire are designed to use one type of studs which may be driven into the tire in one orientation or in a random orientation if different stud designs are used and which then enters the studding tool in a random way. Known solution also disclose studding devices which comprise two studding units, each with one studding tool, which may be used independently or dependently from each other to drive antiskid studs into the tread of a tire at different angles and positions relative the surface of the tread of the tire.

A known solution for driving antiskid studs into stud holes of a tread of a pneumatic tire is presented in EP 3 357 676 B1. This solution is a more developed solution which presents a device which comprises a tire holder and one studding unit. The studding unit comprises primary and secondary studding tools, which each in a known manner comprises a mouth for injecting a stud out of the studding tool into one of the stud holes in a primary direction, by the primary studding tool, and in a secondary direction, by the secondary studding tool. The respective studding tool further comprising a bore for guiding the stud to the mouth and a pusher movable in the bore for pushing the stud out from the bore. The studding unit further comprises a body to which the two studding tools are fixed at a fixed distance from each other. The device further comprises a first actuator configured to move the studding unit and/or the tire holder relative each other in the axial direction of the tire, that is transverse the rotation direction of the tire, i.e. across the tread of the tire transverse the rotation direction. The studding tools may further be rotated along a respective axis to allow different orientations of studs if the studs are non-symmetric. By this device, studs may be inserted in a number of different positions and orientations over the tread of the tire.

Prior art solutions presented above first of all lacks the possibility to quick and easy mount and dismount the studding tool/tools from the studding unit, which is a disadvantage, since the studding tools are subjected to tear during the studding process and thus need to be replaced or renovated, or at least that tear parts of the studding tool must be replaced. Since the process of studding tires is a high-speed process which runs more or less around the clock, the downtime of the process must be minimized.

### Summary of the invention

It is an object of the invention to address at least some of the problems and issues outlined above. It is possible to achieve these objects and others by a studding tool and a studding unit as defined in the attached independent claims.

According to an aspect of the invention, a studding tool arranged for driving antiskid studs into stud holes of a tread of a tire in a first axial direction is disclosed. The studding tool comprises a body, which extends in the first axial direction and which body comprises a first end and an opposite second end. The studding tool further comprises an outlet arranged at the second end of the body, which outlet is arranged to eject a stud out of the studding tool in the first axial direction; a claw arrangement arranged at the outlet and arranged to guide a stud ejected from the outlet and release the stud into a stud hole of a tire. The claw arrangement may be used for circular as well as other shapes of studs like triangular, quadratic, square, hexagonal etc. Further, the studding tool comprises a first cavity arranged in the body and extending in the first axial direction, from the first end to the second end of the body, which first cavity is arranged to guide a stud towards the outlet; a pusher movable in the first cavity and arranged to push a stud out from the cavity as a response of the reciprocating motion acting on the pusher; an inlet arranged to feed studs into the first cavity from a first side of the studding tool, wherein the inlet comprises an opening which ends in the first cavity. Further, the studding tool comprises at least one locking portion, which is arranged in the body of the studding tool. The at least one locking portion is arranged to engage with a locking pin of a studding unit, for locking the studding tool to a studding unit. The locking portion preferably extends, at least by a portion, in a direction which substantially is transverse to the first axial direction of the studding tool, and the locking portion may have any form. For example, the locking portion may be a recess, a hole, a bore etc.

By that, the studding tool may be engaged quick and easy to a studding unit as well as released quick and easy from a studding unit. The studding unit (which is described in the background and will be described further down below in the description) comprises a reciprocating means which is arranged to cause the reciprocating motion acting on the pusher of the studding tool to drive studs into stud holes of a tread of a tire in a first axial direction. The process tear on parts of the studding tool why it is important to quick and easy change studding tool, for not driving costs related to down time om the process. Since the locking portion is arranged to engage with a locking pin of the studding unit, the locking pin by its design may have different portions which engages respective disengages with the locking portion of the studding tool. Prior art solutions only provide fixed solutions where the studding tool is screwed to the studding unit, which is time-consuming.

According to an embodiment, at least the first end of the body of the studding tool is circular and the locking portion of the body is arranged as a circumferential groove. By that, the studding tool may easily be connected or released since a circumferential groove along the outer periphery of the circular first end is easy to use for engagement with a locking pin of a studding unit, which for example may engage the circumferential groove along one side of the first end of the studding tool. The circular shape also enables that the studding tool may be rotated to a wanted position relative a studding unit, to which the studding tool shall be connected, which enables a setting of angles if other than round studs are to be used, like for example triangular or square studs. Of course, other possible designs of the first end of the studding tool may achieve the same functionality, like for example, square, pentagon, hexagon, heptagon, octagon or other forms with edge-like surfaces, which also may provide a certain "rotation" positioning. All these types may be provided with a "circumferential" groove in the meaning like a groove running along and around an outer periphery of the first end.

According to an embodiment, the first end of the body of the studding tool comprises at least one positioning recess at an outer periphery of the circular first end of the body. The at least one positioning recess is arranged for positioning the studding tool relative a studding unit, when the studding tool is connected to a studding unit. This, to ensure that a certain angle is obtained of the studding tool relative the studding unit, i.e., an angle which decides how the studding tool may be rotated around its central axis (around the first axis direction). This is used for studs which are not symmetrical, where the angle of the stud relative the rotation direction of the tread of the tire is important. This allows different orientations of studs. In some cases, there is a need of more than one positioning recess. For example, one tire manufacturer may need nine different possible positions, why nine positioning recesses are spread out, spaced apart along the outer periphery of the circular first end of the body. This means that, seen from a center of the first end of the circular studding tool, the positioning recesses are positioned along the periphery, for example along an upper edge of the first end of studding tool. For example, a first recess may be positioned along a half circumference of the circular first end, such as a first recess is positioned at an angle of 0°, the next at 30°, and so on up to 180°. The positioning recesses may extend in the first axial direction (X), i.e. being a bit elongate or alternatively be round. By the quick and easy release of the studding tool from the studding unit, the studding tool with the recesses may easily be rotated around its axis such as a proper positioning recess determines the wanted angle, and in this position, the studding tool may be quick and easy connected to the studding unit again via the locking portion at the first end of the studding tool. Known studding tools may only be in fixed positions relative a body of a studding unit and is not easily rotated, but instead must be exchanged to another tool with another angle.

According to an embodiment, the positioning recess/recesses of the studding tool is arranged on a second side of the studding tool which is substantially opposite the first side of the studding tool.

According to an embodiment, the body of the studding tool further comprising a stop edge arranged between the first end and the second end of the studding tool. The stop edge is arranged to stop against a part of a studding unit, to which the studding tool is to be connected, such as providing an end position for the studding tool when connected to a studding unit.

According to an embodiment, the body of the studding tool further comprises at least one positioning mark, which is arranged at the first side of the studding tool. The first side of the studding tool may be a side which faces away from the studding unit, i.e. a side which faces an operator which are to connect or disconnect the studding tool from the studding unit. An operator may of course also be a robot performing a shift of studding tool. The positioning mark serves as an indication of which "rotation angle" the studding tool has relative the studding unit, which is used when positioning the studding tool in the studding unit (see description further below). This is used for example when the studding tool is used with studs which are to be inserted into a tire in a certain angle relative the tread of the tire, for example rotated 15° relative the roll direction of the tire, if the stud is square or asymmetrical or the like.

According to an aspect, a studding unit arranged for holding a studding tool and for causing a studding tool to drive antiskid studs into stud holes of a tread of a tire in a first axial direction, is disclosed. The studding unit comprises a piston arrangement arranged for causing a reciprocating motion of a piston, back and forth in the first axial direction; at least one studding tool according to any of the above-described embodiments, wherein a pusher of the studding tool is in contact with the piston of the piston arrangement and the piston is arranged to cause a reciprocating motion of the pusher of the studding tool. The studding unit further comprises an adapter which is connected to the piston arrangement and arranged for attachment of the studding tool to the adapter. The adapter comprises a first through hole with an axial direction which is similar with the first axial direction, wherein the pusher of the studding tool is movable in the through hole of the adapter, back and forth in the first axial direction. The adapter further comprises a first locking pin which is movable relative the adapter in a second direction, which substantially is a transverse direction relative the first direction. The locking pin is movable between a locking position and an unlocking position, wherein in the locking position the locking pin is arranged to engage with the locking portion of the studding tool, for locking the studding tool to the adapter. In the unlocking position the locking pin is arranged to release from the engagement with the locking portion of the studding tool for unlocking the studding tool from the adapter.

Such a studding unit enables a very quick change of studding tool by the quick-connector function, when using an adapter with a locking pin for the connect/release of the studding tool to/from the studding unit. This is timesaving and thus minimizes the downtime of a studding unit used in a studding process when studding a tire, and thus minimizes the production cost for the process. Since the studding tool may be engaged quick and easy to the studding unit as well as released quick and easy from a studding unit, via the adapter. The reciprocating motion of the piston of the piston arrangement causes the reciprocating motion of the pusher of the studding tool wherein studs are driven into the stud holes of a tread of a tire in a first axial direction. As mentioned above the process tear on parts of the studding tool why it is important to quick and easy change studding tool, for not driving costs related to down time om the process. Prior art solutions only provide fixed solutions where the studding tool is screwed to the studding unit, which is time-consuming and cost driving.

According to an embodiment, the adapter comprises a second cavity which extends in the second direction, wherein the first locking pin of the adapter is movable in the second cavity between the locking position and the unlocking position.

According to an embodiment, the second cavity is arranged such as it cuts through a part of an outer periphery of the first through hole. This means that the wall of the first through hole is missing at the position of the second cavity passing along "the side" of the first though hole. For example, if the first through hole is orientated vertically, the second cavity is orientated horizontally and cuts a bit of the wall of the first through hole, at its periphery, at the position of the second cavity. By such an arrangement, the first locking pin may be arranged such as it interferes with the locking portion of the studding tool, in the locking position, and does not interfere with the locking portion of the studding tool, in the unlocking position. An alternative solution may be that the second cavity cuts the first through hole "right through", for example as a horizontal bore right through a vertical first through hole. This enables a locking pin which is inserted in a locking portion of the studding tool, which is arranged as a horizontal hole in the first end of the studding tool.

According to an embodiment, the first locking pin comprises at least a first part with a first width, which first part in the locking position of the locking pin interferes with the locking portion of the studding tool. The first locking pin further comprises a second part with a second width which is smaller than the first width, which second part in the unlocking position of the first locking pin do not interfere with the locking portion of the studding tool. For example, the locking pin may have a circular cross-section, and thus the first and second width are the same as a first and second diameter of the locking pin. In that case, the second cavity preferably has a circular cross-section too. The first locking pin and the second cavity may of course have other forms, like square, quadratic, triangular or the like. By having at least two different width, or preferably three different widths, the first locking pin may be moved a short distance inside the second cavity, to expose the thinner second part to the "cut-through" of the first through hole, for example.

According to an embodiment, in the unlocking position of the locking pin, the first locking pin (22) is arranged to allow rotation of the studding tool (10) around the first axial direction (X).

According to an embodiment, the first through hole of the adapter is circular and arranged to accommodate the first end of the body of the studding tool. By having a circular first through hole, it is easy to release the studding tool, rotate it just below the locking position, for example a short distance below an upper locking position, and then push the studding tool upwards in the new rotated position, if another angle of the studding tool (relative its axial direction) is to be used. This functions of course when the first end (upper) of the studding tool is circular but also for other forms as for example the octagon form and the like.

According to an embodiment, the first locking pin of the adapter comprises a spring, arranged to push the first locking pin in the second direction, from the unlocking position to the locking position by means of a spring force of the spring. By having a spring-loaded first locking pin, the connection and the release of the studding tool is of quick-connection type. For example, the first locking pin may protrude out from the adapter in the locked position, and to unlock the studding tool, the first locking pin is pushed inwards, such as the spring is depressed, and the first locking pin releases from the locking portion of the studding tool. And vice versa, when connecting the studding tool to the adapter, the studding tool may be formed such as it can be pushed into position, wherein the first locking pin snaps into locking position by use of the spring force of the spring. This is not at hand in any prior art solutions.

According to an embodiment, the adapter further comprises a second locking pin, which is arranged at an edge of the through hole and which second locking pin protrudes radially from the edge in direction towards a center of the through hole. The second locking pin is arranged to engage with one of the positioning recesses of the studding tool when one of the positioning recesses aligns with the second locking pin. The second locking pin is in the locked position of the studding tool to the adapter engaged with one positioning recess, by that the protruding second locking pin of the adapter is arranged in one positioning recess. When the studding tool is released it leaves its position in the adapter, for example by that an operator lowers the studding tool a bit (it doesn't need to be completely removed) and now it is possible to rotated the studding tool such as another positioning recess comes into position in front of or at the second locking pin, to provide a different rotation angle (referring to the axial direction of the studding tool). Then, the studding tool may be pushed back into its stop position in which it is locked by the first locking pin and at the same time, the second locking pin prevent rotation of the studding tool relative the adapter.

According to an aspect, a studding assembly comprising at least one studding unit according to any of the above embodiments is disclosed. The studding assembly may comprise a base onto which the studding unit is mounted. By at least one studding unit is meant that for example one, two or more studding units may be a part of the studding assembly. The respective studding units (if more than one) may be mounted on a respective base, base plate or the like, or on a common base/base plate.

Further possible features and benefits of this solution will become apparent from the detailed description below.

### Brief description of drawings

The solution will now be described in more detail by means of exemplary embodiments and with reference to the accompanying drawings, in which:

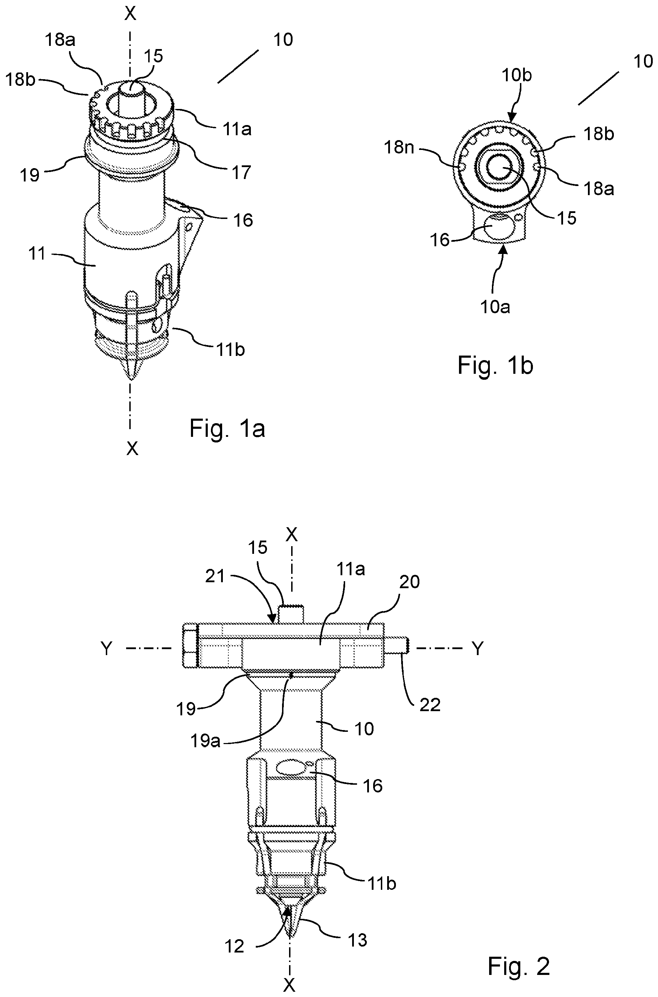

Fig. 1 is a view of a studding tool according to the invention, seen obliquely from above and Fig. 1b is a view of the studding tool of Fig. 1 seen from above.
Fig. 2 is a view from a first side which is a front view of the studding tool of Fig. 1, when the studding tool is attached to an adapter of a studding unit according to the invention.

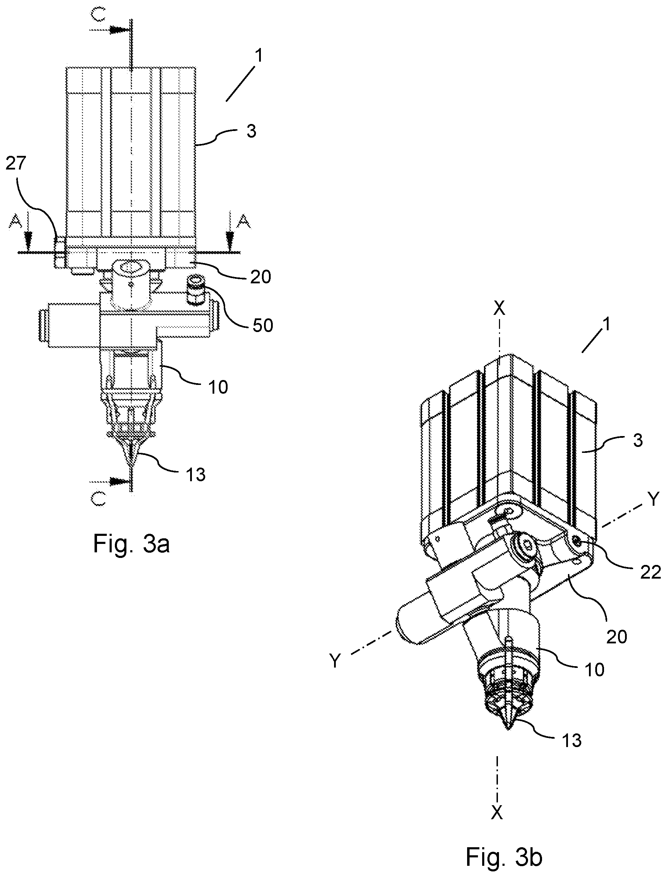

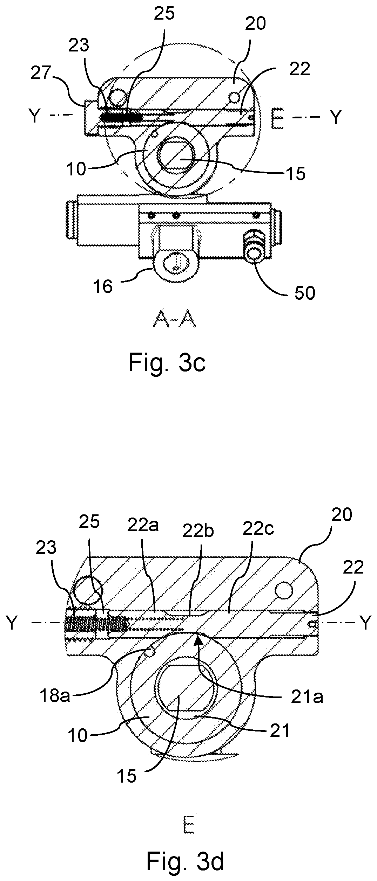

Fig. 3a is a front view of a studding unit according to the invention, wherein the studding unit comprises the studding tool of Fig.1 and the adapter visible in Fig. 2. In Fig. 3a the studding tool is in an unlocked position relative the adapter of the studding unit, in which position the studding tool is possible to rotate and also possible to remove from the adapter. Fig. 3b is a view of the studding unit of Fig. 3a seen obliquely from below. Fig. 3c is a section view A-A of the adapter of the studding unit of Fig. 3a. Fig. 3d is a zoomed view E of a part of the adapter of Fig. 3c.

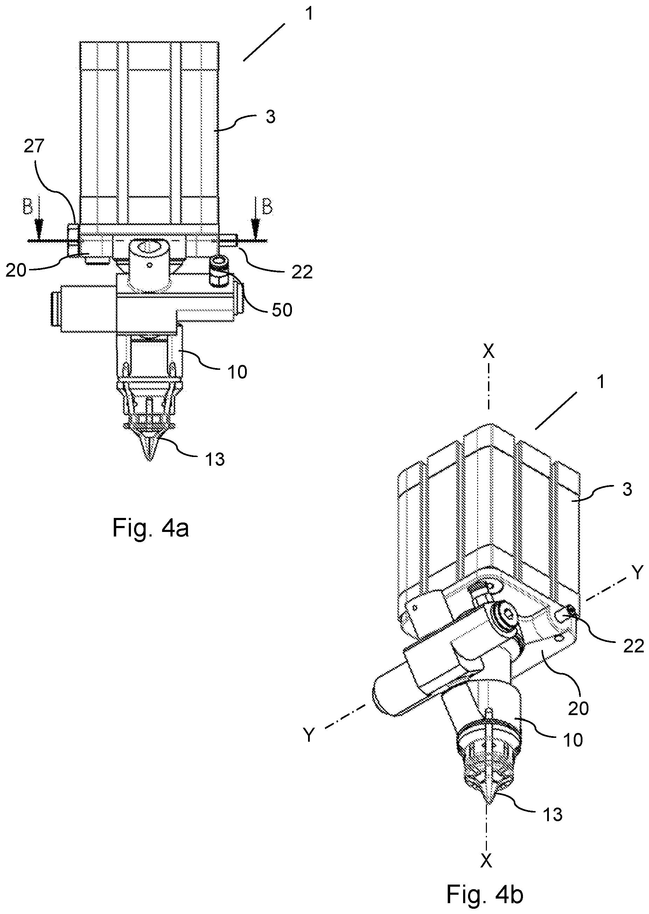

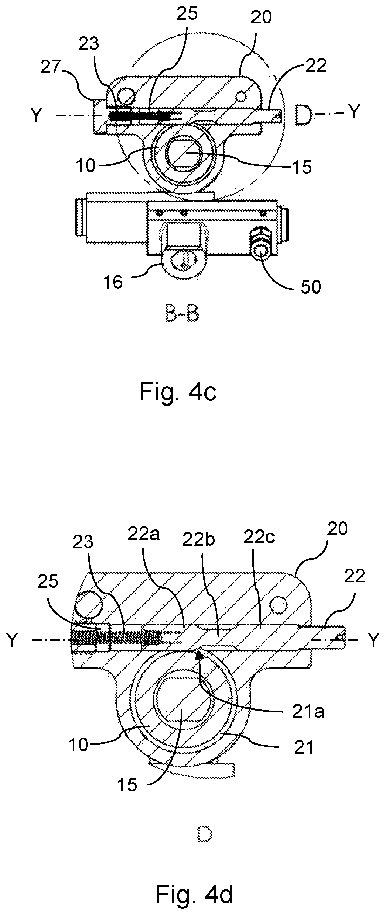

Fig. 4a is a front view of the studding unit according to the invention, showing the studding tool in a locked position relative the adapter of the studding unit, in which position the studding tool is not possible to rotate and not possible to remove from the adapter. Fig. 4b is a view of the studding unit of Fig. 4a seen obliquely from below. Fig. 4c is a section view B-B of the adapter of the studding unit of Fig. 4a. Fig. 4d is a zoomed view D of a part of the adapter of Fig. 4c.

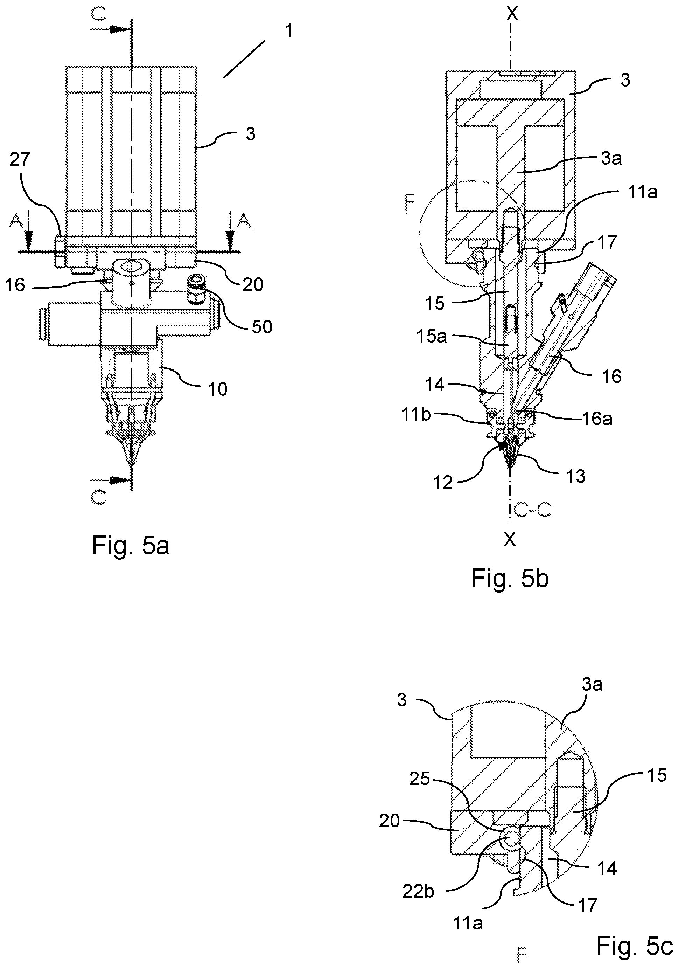

Fig. 5a is a front view of a studding unit according to the invention, showing when the studding tool is in an unlocked position relative the adapter of the studding unit. Fig. 5b is a section view C-C through the adapter of the studding unit of Fig. 5a, wherein the section shows the studding unit from the side. Fig. 5c is a zoomed view F of a part of the adapter of Fig. 5b, showing the unlocked position of the studding tool, in which the studding tool is possible to rotate and also possible to remove from the adapter.

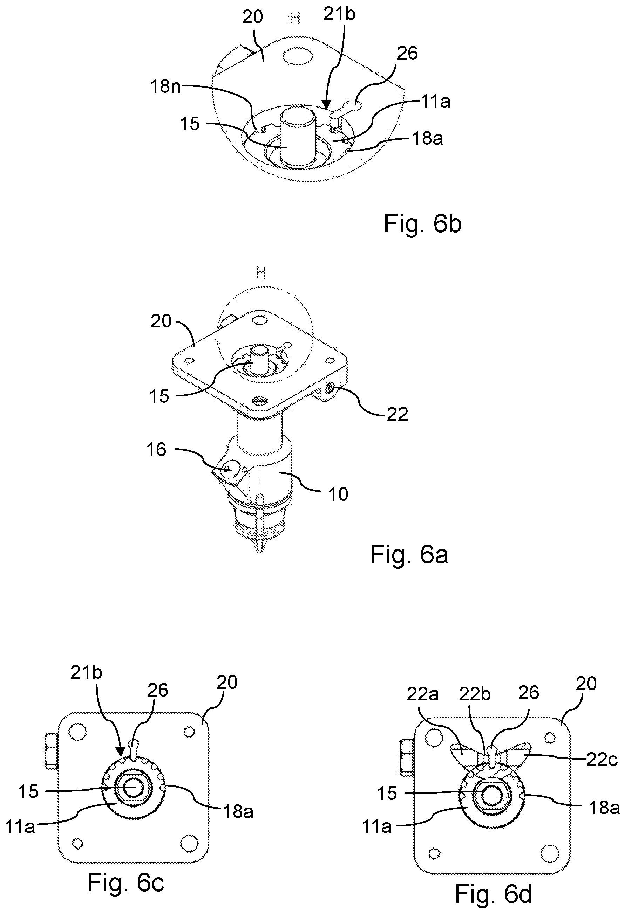

Fig. 6a is a view of the studding tool and the adapter according to the invention, in an unlocking position, in which the studding tool is slightly lowered/released from a locking position to the unlocking position. Fig 6b is a zoomed view H of Fig. 6a and Fig 6c is a view from above of the adapter and studding tool of Fig. 6a. Fig. 6d also shows a view from above of the adapter and studding tool of Fig. 6a, but with a "cut" through the adapter to show details of the unlocking/locking function of the invention.

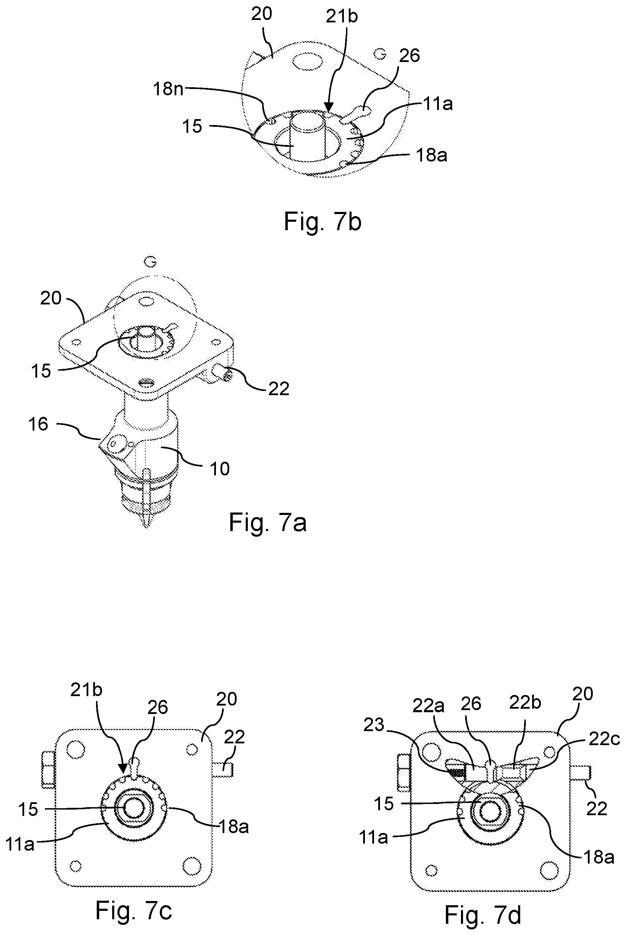

Fig. 7a is a view of the studding tool and the adapter according to the invention, in a locking position, in which the studding tool is locked to the adpater. Fig 7b is a zoomed view G of Fig. 7a and Fig 7c is a view from above of the adapter and studding tool of Fig. 7a. Fig. 7d also shows a view from above of the adapter and studding tool of Fig. 7a, but with a "cut" through the adapter to show details of the unlocking/locking function of the invention.

### Detailed description

Briefly described, a studding tool and a studding unit is disclosed. The inventive design provides a solution which enables a quick connection solution wherein a studding tool quickly may be installed or removed from a studding unit. Further, the studding tool also comprises a possibility to provide insertion of studs into a tire in different angles, by that that studding tool, in the unlocked position is possible to rotate axially around its central axis, to a wanted rotation angle, and the quickly be connected to that studding unit in the correct angle, by the quick connection solution.

Fig. 1a shows a studding tool 10 according to the invention, seen obliquely from above and Fig 1b shows the studding tool 10 from above. The studding tool 10 is arranged for driving antiskid studs into stud holes of a tread of a tire in a first axial direction X, which means that the studding tool 10 is arranged to move back and forth in the first direction X. The studding tool 10, which in the preferred embodiment is substantially tube-shaped and comprises a body 11 which extends in the first axial direction X and the body 11 comprises a first end 11a and an opposite second end 11b. Seen in a normal use, the first end 11a may be an upper end and the opposite second end 11b a lower end. The studding tool 10 further comprises an outlet 12 (see Fig 2) arranged at the second end 11b of the body 11, which outlet 12 is arranged to eject a stud (not visible) out of the studding tool 10 in the first axial direction X. The second end 11b of the studding tool 10 comprises a claw arrangement 13 arranged at/near the outlet 12. The claw arrangement is arranged to guide a stud ejected from the outlet 12 and position the stud into a stud hole of a tire. At the first end 11a of the body 11 of the studding tool 10, a pusher 15 is visible and the pusher 15 is movable inside a first cavity (not visible, see Fig. 5b) arranged in the body 11. The first cavity extends in the first axial direction X, from the first end 11a to the second end 11b of the body 11 and the first cavity is arranged to guide a stud towards the outlet 12. The pusher 15 is arranged to push a stud out from the first cavity as a response of the reciprocating motion acting on the pusher 15, which will be explained further below. An inlet 16 is arranged at a first side 10a of the studding tool 10. The inlet 16 is normally connected to a feeding arrangement (not visible), which may be a tube or the like, in which studs are piled up to be ready to be fed into the studding tool 10, wherein the inlet 16 is arranged to receive studs and feed studs into the first cavity 14 from the first side 10a of the studding tool 10. The first side is according to the preferred embodiment a front side of the studding tool 10. The studding tool 10 further comprises a locking portion 17, which in the preferred embodiment is arranged as a circumferential groove 17 arranged at tube-shaped first end 11a of the body 11, which locking portion 17 is arranged to engage with a locking pin of a studding unit 1 (see further below Fig. 4a and forwards).

The first end 11a of the body 11 of the studding tool 10 comprises at least one positioning recess 18a, 18b, ..., 18n, which is arranged at an outer periphery of the circular first end 11a of the body 11. The number of positioning recesses 18a, 18b, ..., 18n may vary and depends on the need of the number of possible rotation positions (rotation angles) needed by a producer of studded tires. The positioning recesses 18a, 18b, ..., 18n are arranged substantially on a second side 10b of the studding tool 10 which more or less is an opposite side relative the first side 10a of the studding tool 10. The positioning recesses 18a, 18b, ..., 18n are in the preferred embodiment arranged as, in the first direction, slightly elongated recesses arranged at the upper edge of the first end 11b of the body 11. The body 11 of the studding tool 10 further comprises a stop edge 19 arranged between the first end 11a and the second end 11b. The stop edge 19 is preferably arranged nearer the first end 11a, and the stop edge 19 is arranged to stop the studding tool 10 when inserted in an adapter 20 (see Fig. 2) in direction upwards, that is in direction from the second end 11b to the first end 11a, to provide an end position of the studding tool 10 in a locking position to the adapter 20.

Fig 2 is a view from the first side 10a of the studding tool 10, which is a front view as mentioned above. The studding tool 10 is in this figure attached to the adapter 20 which is arranged to be connected to a studding unit (not visible). The adapter 20 comprises a first through hole 21 (not directly visible) with an axial direction which is similar with the first axial direction X, and the pusher 15 of the studding tool 10 is movable in the first through hole 21 of the adapter 20, back and forth in the first axial direction X. The adapter 20 further comprises a first locking pin 22 which is movable relative the adapter 20 in a second direction Y, which preferably is a transverse direction relative the first direction X. The second locking pin 22 is movable in the adapter 20 between a locking position and an unlocking position, wherein in the locking position the locking pin 22 is arranged to engage with the locking portion 17 of the studding tool 10, for locking the studding tool 10 to the adapter 20. In the unlocking position, the locking pin 22 is arranged to release from the engagement with the locking portion 17 of the studding tool 10 for unlocking the studding tool from the adapter 20. This will be explained below in relation to Figs. 3a-d and 4a-d. In the figure, it may be seen that the stop edge 19 of the studding tool 10 stops against the adapter 20 which means that when inserting the studding tool 10 in direction upwards, the inserting motion upwards is stopped by the stop edge 19, wherein the studding tool is in an end position which is the same as the locking position. Further the studding tool 10 comprises at least one positioning mark 19a arranged at the first side 10a of the studding tool 10. The positioning mark 19a serves as an indication of which "rotation angle" the studding tool 10 has relative the adapter 20 (and the studding unit), which is used when positioning the studding tool 10 in the adapter 20, which is used when studs are to be inserted into a tire with a certain angle relative the tread of the tire, for example rotated 15° relative the roll direction of the tire, if the stud is square or asymmetrical or the like. A corresponding mark may be arranged on the adapter 20.

Fig. 3a is a front view of a studding unit 1 according to the invention in its unlocking position, and Fig. 3b is a view of the studding unit of Fig. 3a seen obliquely from below. Fig. 3c shows a section view A-A of the adapter 20 of the studding unit 1 of Fig. 3a and Fig. 3d is a zoomed view E of a part of the adapter of Fig. 3c. The studding unit 1 is arranged for holding the studding tool 10 and for causing the studding tool 10 to drive antiskid studs into stud holes of a tread of a tire in the first axial direction X. The studding unit 1 comprises a piston arrangement 3, which is arranged for causing a reciprocating motion of a piston (not visible, see Fig. 5b) back and forth in the first axial direction X. The piston arrangement 3 may in turn be connected to a base/base plate or the like, for example at its back or top side, which in turn is connected to a complete studding machine or setup, which comprises stand, tire holder, control systems, driving arrangements, pneumatic connections and pneumatic driving arrangements and the like.

The studding unit 1 comprises, as mentioned above, the studding tool 10 and the adapter 20. The adapter 20 is connected to the piston arrangement 3, preferably fixed to it for example with screws, and the adapter 20 is arranged for quick connection and release of the studding tool 10 to/from the adapter 20. As mentioned above, the adapter 20 comprises a first through hole 21, which has an axial direction which is similar with the first axial direction X, wherein the pusher 15 of the studding tool 10 as well as the studding toll 10 are movable in the first through hole 21, see Figs. 3c-d and Fig. 5b, where the pusher 15 is arranged centric into the first through hole 21 and enclosed by the first end 11a of the body 11 of the studding tool 10. The pusher 15 of the studding tool 10 may be circular, but the upper end of the pusher 15 preferably has flat portions, for better grip when connected to the piston of the piston arrangement 3 (the piston is visible in Fig. 5b). The first through hole 21 is circular and also arranged to accommodate the first end 11a of the body 11 of the studding tool 10.

The adapter 20 further comprises a second cavity 25, which extends in the second direction Y which is transverse relative the first direction X, and preferably, the second cavity is arranged as a bore which is open at both ends creating a through hole. The second cavity 25 is further arranged such as it cuts through a part of an outer periphery 21a of the first through hole 21.

The adapter 20 further comprises the first locking pin 22, which is movable relative the adapter 20 in the second direction Y, by being arranged into the second cavity 25. The second locking pin 22 is movable in the second cavity 25, between a locking position and an unlocking position, wherein in the locking position the locking pin 22 is arranged to engage with the locking portion 17 of the studding tool 10, for locking the studding tool 10 to the adapter 20. In the unlocking position, the locking pin 22 is arranged to release from the engagement with the locking portion 17 of the studding tool 10 for unlocking the studding tool from the adapter 20. In Fig. 3a-d the first locking pin 22 is in its unlocking position, wherein the first locking pin 22 is pushed to its unlocking position, which is from right to left in the figures, such as it does not protrude from the side surface of the adapter 20.

As best seen in Figs. 3c-d, the first locking pin 22 comprises at least a first part 22a, 22c with a first width, and a second part 22b with a second width which is smaller than the first width. In the preferred embodiment, the first locking pin 22 comprises two first parts 22a, 22c, with the second part 22b positioned between them and by that forming a waist of the first locking pin 22. In the figures, it may be seen that the second cavity 25 runs through the body of the adapter 20, and the first locking pin 22 is arranged in the second cavity and movable therein, in the second direction Y. In the unlocking position of the first locking pin 22 does not interfere with the locking portion 17 of the studding tool 10 (the circumferential groove), wherein the studding tool 10 may be withdrawn (downwards in the figures) from the adapter 20, either totally to completely remove the studding tool 10 from the adapter 20, or just a bit lowered to be able to rotate the studding tool 10 around its central axis (around the first axis direction) for setting another angle before locking it to the adapter 20 again. This will be further explained below at Figs. 6a-d and Figs. 7a-d. The adapter 20 further comprises a spring 23 which is arranged around the first locking pin 22. The spring 23 is arranged to push the first locking pin 22 in the second direction Y from the unlocking position to the locking position by means of a spring force of the spring 23. The spring 23 is arranged between an anvil for the spring 23, which in the preferred embodiment is a screw 27, which is fixedly screwed into the second cavity 25 which of course comprises corresponding threads.

To release the studding tool 10 from the adapter 20, an operator (or a robot) pushes the first locking pin 22 inwards, into the second cavity 25 (to left in the figures) such as the first part 22a of the first locking pin 22 leaves the first through hole 21 in direction towards the anvil 27 (screw 27), wherein the spring 23 gets compressed. Simultaneously, the second part 22b of the first locking pin 22 enters the first through hole 21 and when in line with the first through hole 21, the dimension of the first through hole 21, the dimensions of the first end 11a of the studding tool 10 and the circumferential recess 17 (the locking portion 17) allows the studding tool 10, which best can be seen in Figs. 5b-c.

Fig. 4a is a front view of the studding unit 1 in its locking position, and Fig. 4b is a view of the studding unit of Fig. 4a seen obliquely from below. Fig. 4c shows a section view B-B of the adapter 20 of the studding unit 1 of Fig. 4a and Fig. 4d is a zoomed view D of a part of the adapter of Fig. 4c. These four figures show more or less the opposite of what is explained in Fig. 3a-d, namely the locking position, in which the studding tool 10 is locked to the adapter 20. In this position, the first locking pin 22 is in an outermost position and protrudes out from the body of the adapter 20. When an operator or robot or the like has pushed the first locking pin 22 into the adapter 20 and for example changed or rotated the studding tool 10, the studding tool 10 is pushed upwards, into the first through hole 21 until it stops due to the stop edge 19a hits the underside of the adapter 20. In this end position, the locking portion 17 of the studding tool 10 aligns with the second cavity 25 of the adapter 20, and due to the spring force of the spring 23, the first locking pin 22 pushed towards the locking position (to the right in the figures). This is possible since the locking portion 17, in the form of the circumferential recess, provides a passage for the first locking pin 22. In the locking position, the first part 22a of the locking pin 22 enters the first through hole 21 of the adapter 20 and also the locking portion 17 of the studding tool 10, wherein the studding tool 10 is locked to the adapter.

Fig. 5a is a front view of the studding unit 1, showing when the studding tool 10 is in an unlocked position relative the adapter 20. Fig. 5b is a section view C-C through the adapter 20 of the studding unit 1 of Fig. 5a, wherein the section shows the studding unit from the side. Fig. 5c is a zoomed view F of a part of the adapter of Fig. 5b, showing the unlocked position of the studding tool 10, in which the studding tool 10 is possible to rotate and also possible to remove from the adapter 20. The piston arrangement 3 which comprises a piston 3 and is arranged for causing a reciprocating motion of the piston 3a back and forth in the first axial direction X. The piston 3a is fixed or in contact with the pusher of the studding tool 10. The adapter 20 is fixedly connected to the piston arrangement 3 (below the same) and the pusher 15 of the studding tool 10 is movably arranged upon the reciprocating motion of the piston 3a and arranged into a first cavity 14 arranged in the body 11 and extending in the first axial direction X, from the first end 11a to the second end 11b of the body 11. The first cavity 14 is as mentioned arranged to guide a stud towards the outlet 12 of the studding tool 10, and the claw arrangement 13 guides the stud into a hole of a tire. The claw arrangement 13 may thus be designed in several ways depending of the form of the stud, and normally it also is expandable to expand the hole of the tire, in which the stud is to be inserted, release the stud into the hole and then be pulled out, wherein the stud gets fixed into the hole of the tire. The pusher 15 is subjected to wear and is therefore provided with a front part 15a, which is screwed of in other way connected to the front end of the pusher 15, to be able to change this easily. The studs (not visible) are fed through the inlet 16 which is arranged to feed studs into the first cavity 14 from the first side 10a of the studding tool 10, and enters the first cavity 14 through an opening 16a which ends in the first cavity 14.

In Fig. 5c, a part of the first end 11a of the body 11 of the studding tool 10 may be seen in an unlocked position/released position in the adapter 20. The upper end of the pusher 15 is connected to the piston 31 of the piston arrangement 3, and the locking portion 17/the circumferential recess is just below the second cavity 25. The second part 22b of the first locking pin 22 is visible in the second cavity, wherein the "waist" of the first locking pin 22 enables the studding tool 10 to be released (lowered) or rotated. When pushing the studding tool 10 upwards, relating to Fig. 5c, the first locking pin 22 snaps into the locking portion 17 of the studding tool 10, wherein it is locked to the adapter 20.

Fig. 6a is a view of the studding tool 10 and the adapter 20, in an unlocked position, in which the studding tool 10 is slightly lowered/released from a locking position to the unlocking position. Fig 6b is a zoomed view H of Fig. 6a and Fig 6c is a view from above of the adapter 20 and studding tool 10 of Fig. 6a. Fig. 6d also shows a view from above of the adapter 20 and studding tool 10 of Fig. 6a, but with a "cut" through the adapter 20 to show details of the unlocking/locking function of the invention. The adapter 20 comprises a second locking pin 26, which is arranged at an edge 21b of the first through hole 21 and which second locking pin 26 protrudes a short distance radially from the edge 21b, i.e., in direction towards a center of the first through hole 21. The second locking pin 26 is arranged to engage with one of the positioning recesses 18a, 18b, ..., 18n of the studding tool 10 when one of the positioning recesses 18a, 18b, ..., 18n aligns with the second locking pin 26, which may be seen in the figures. In the unlocked/released position, the studding tool 10 just must be lowered a short distance, a distance slightly longer that the length of the second locking pin 26 (in the first axial direction X), to be able to rotate it such as another positioning recess 18a, 18b, ..., 18n aligns with the second locking pin 26, to set another angle. This position is visible in Fig. 6a-b. If the stud is for example square, the stud can be positioned at an angle relative the "roll direction" of the tire, and by the positioning recesses, the same studding tool 10 may be used for a number of different stud types/stud designs. As described above, an as can be seen in Fig. 6d, the first locking pin 22 comprises two first parts 22a, 22c, with the second part 22b positioned between them and by that forming a waist of the first locking pin 22, since the second part 22b is thinner. Preferably, the first locking pin 22 has a circular cross-section and the diameter of the first parts 22a, 22c are larger than the second part 22b of the first locking pin 22. In the figure, it may be seen that in the unlocked position, the first locking pin 22 does not interfere with the locking portion 17 of the studding tool 10 and therefore is possible to rotate to another positioning recess 18a, 18b, ..., 18n, if needed. When the correct positioning recess 18a, 18b, ..., 18n, is aligned with the second locking pin 26, the studding tool 10 may be pushed in direction towards the adapter 20 (upwards in the figure), wherein the second locking pin 26 enters a corresponding positioning recess 18a, 18b, ..., 18n, until it automatically locks, by that the spring force of the spring 23 pushes the first locking pin 22 to the locking position. This is seen in Figs. 7a-d which show the same views as in Figs. 6a-d but with the studding tool 10 in a locking position at the adapter 20. Especially in Fig. 7d it is clear how the first part 22a interferes with the locking portion/locking recess 17 of the studding tool 10 and in Fig. 7b it is clear how the second locking pin 26 has entered one of the positioning recess 18a, 18b, ..., 18n. In this position, the studding tool 10 is prevented to rotate and prevented to loosen from its locked position to the adapter 20.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A studding tool (10) arranged for driving antiskid studs into stud holes of a tread of a tire in a first axial direction (X), the studding tool (10) comprising:
a body (11) extending in the first axial direction (X) and which body (11) comprises a first end (11a) and an opposite second end (11b),
an outlet (12) arranged at the second end (11b) of the body (11), which outlet (12) is arranged to eject a stud out of the studding tool (10) in the first axial direction (X),
a claw arrangement (13) arranged at the outlet (12) and arranged to guide a stud ejected from the outlet (12) and position the stud into a stud hole of a tire,
a first cavity (14) arranged in the body (11) and extending in the first axial direction (X), from the first end (11a) to the second end (11b) of the body (11), which first cavity (14) is arranged to guide a stud towards the outlet (12),
a pusher (15) movable in the first cavity (14) and arranged to push a stud out from the first cavity (14) as a response of the reciprocating motion acting on the pusher (15),
an inlet (16) arranged to feed studs into the first cavity (14) from a first side (10a) of the studding tool (10), wherein the inlet (16) comprises an opening (16a) which ends in the first cavity (14),
**characterized by that** the studding tool (10) further comprises at least one locking portion (17) arranged in the body (11) of the studding tool (10), which at least one locking portion (17) is arranged to engage with a first locking pin (22) of a studding unit (1), for locking the studding tool (10) to a studding unit (1).

2. Studding tool (10) according to claim 1, wherein at least the first end (11a) of the body (11) of the studding tool (10) is circular and the locking portion (17) of the body (11) is arranged as a circumferential groove (17).

3. Studding tool (10) according to claim 2, wherein the first end (11a) of the body (11) of the studding tool (10) comprises at least one positioning recess (18a, 18b, ..., 18n) arranged at an outer periphery of the circular first end (11a) of the body (11).

4. Studding tool (10) according to claim 3, wherein the positioning recesses (18a, 18b, ..., 18n) of the studding tool (10) is arranged on a second side (10b) of the studding tool (10) which is substantially opposite the first side (10a) of the studding tool (10).

5. Studding tool (10) according to any of the preceding claims, wherein the body (11) of the studding tool (10) further comprising a stop edge (19) arranged between the first end (11a) and the second end (11b) of the studding tool (10).

6. Studding tool (10) according to any of the preceding claims, wherein the body (11) of the studding tool (10) further comprising at least one positioning mark (19a) arranged at the first side (10a) of the studding tool (10).

7. A studding unit (1) arranged for holding at least one studding tool (10) according to any of the preceding claims and for causing a studding tool (10) to drive antiskid studs into stud holes of a tread of a tire in a first axial direction (X), the studding unit (1) comprising:
- a piston arrangement (3) arranged for causing a reciprocating motion of a piston (3a) back and forth in the first axial direction (X),
wherein the pusher (15) of the studding tool (10) is in contact with the piston (3a) of the piston arrangement (3), wherein the piston (3a) is arranged to cause a reciprocating motion of the pusher (15) of the studding tool (10),
**characterized by that** the studding unit (1) further comprises an adapter (20) which is connected to the piston arrangement (3) and arranged for attachment of the studding tool (10) to the studding unit (1), wherein the adapter (20) comprises a first through hole (21) with an axial direction which is similar with the first axial direction (X), wherein the pusher (15) of the studding tool (10) is movable in the first through hole (21) of the adapter (20), back and forth in the first axial direction (X), wherein the adapter (20) further comprises a first locking pin (22) which is movable relative the adapter (20) in a second direction (Y), which substantially is a transverse direction relative the first direction (X), between a locking position and an unlocking position, wherein in the locking position the first locking pin (22) is arranged to engage with the locking portion (17) of the studding tool (10), for locking the studding tool (10) to the adapter (20), and which in the unlocking position the first locking pin (22) is arranged to release from the engagement with the locking portion (17) of the studding tool (10) for unlocking the studding tool from the adapter (20).

8. Studding unit (1) according to claim 7, wherein the adapter (20) comprises a second cavity (25) which extends in the second direction (Y), wherein the first locking pin (22) of the adapter (20) is movable in the second cavity (25) between the locking position and the unlocking position.

9. Studding unit (1) according to claim 8, wherein the second cavity (25) is arranged such as it cuts through a part of an outer periphery (21a) of the first through hole (21).

10. Studding unit (1) according to claim 9, wherein the first locking pin (22) comprises at least a first part (22a, 22c) with a first width, which first part (22a, 22c) in the locking position of the first locking pin (22) interferes with the locking portion (17) of the studding tool (10), wherein the first locking pin (22) further comprises a second part (22b) with a second width which is smaller than the first width, which second part (22b) in the unlocking position of the first locking pin (22) do not interfere with the locking portion (17) of the studding tool (10).

11. Studding unit (1) according to any of claims 7 - 10, wherein in the unlocking position the first locking pin (22) is arranged to allow rotation of the studding tool (10) around the first axial direction (X).

12. Studding unit (1) according to any of claims 7 - 11, wherein the first through hole (21) of the adapter (20) is circular and arranged to accommodate the first end (11a) of the body (11) of the studding tool (10).

13. Studding unit (1) according to any of claims 7 - 12, wherein the first locking pin (22) comprises a spring (23), arranged to push the first locking pin (22) in the second direction (Y) from the unlocking position to the locking position by means of a spring force of the spring (23).

14. Studding unit (1) according to any of claims 7 - 13, wherein the adapter (20) further comprises a second locking pin (26), which is arranged at an edge (21b) of the first through hole (21) and which second locking pin (26) protrudes radially from the edge (21b) in direction towards a center of the first through hole (21), wherein the second locking pin (26) is arranged to engage with one of the positioning recesses (18a, 18b, ..., 18n) of the studding tool (10) when one of the positioning recesses (18a, 18b, ..., 18n) aligns with the second locking pin (26).

15. A studding assembly **characterized by that** the studding assembly comprising at least one studding unit (1) according to any of claims 7- 14.

## Patentansprüche

1. Spikesetzwerkzeug (10), angeordnet zum Eintreiben von Antirutschspikes in Spikelöcher einer Lauffläche eines Reifens in einer ersten axialen Richtung (X), wobei das Spikesetzwerkzeug (10) Folgendes umfasst:
einen Körper (11), der sich in der ersten axialen Richtung (X) erstreckt, und wobei der Körper (11) ein erstes Ende (11 a) und ein gegenüberliegendes zweites Ende (11b) umfasst,
einen Auslass (12), der an dem zweiten Ende (11b) des Körpers (11) angeordnet ist, wobei der Auslass (12) angeordnet ist, um einen Spike aus dem Spikesetzwerkzeug (10) in der ersten axialen Richtung (X) auszustoßen,
eine Klauenanordnung (13), angeordnet an dem Auslass (12) und angeordnet, um einen aus dem Auslass (12) ausgestoßenen Spike zu führen und den Spike in einem Spikeloch eines Reifens zu positionieren,
einen ersten Hohlraum (14), der in dem Körper (11) angeordnet ist und sich in der ersten axialen Richtung (X) von dem ersten Ende (11a) zu dem zweiten Ende (11b) des Körpers (11) erstreckt, wobei der erste Hohlraum (14) angeordnet ist, um einen Spike zum Auslass (12) zu führen,
eine Drückvorrichtung (15), die in dem ersten Hohlraum (14) bewegbar ist und angeordnet ist, um als Reaktion auf die auf die Drückvorrichtung (15) wirkende Hin- und Herbewegung einen Spike aus dem ersten Hohlraum (14) herauszudrücken,
einen Einlass (16), der dazu angeordnet ist, Spikes von einer ersten Seite (10a) des Spikesetzwerkzeugs (10) in den ersten Hohlraum (14) einzuführen, wobei der Einlass (16) eine Öffnung (16a) umfasst, die in dem ersten Hohlraum (14) endet,
**dadurch gekennzeichnet, dass** das Spikesetzwerkzeug (10) ferner mindestens einen im Körper (11) des Spikesetzwerkzeugs (10) angeordneten Verriegelungsabschnitt (17) umfasst, wobei der mindestens eine Verriegelungsabschnitt (17) angeordnet ist, um mit einem ersten Verriegelungsstift (22) einer Spikesetzeinheit (1) zum Verriegeln des Spikesetzwerkzeugs (10) an einer Spikesetzeinheit (1) in Eingriff zu kommen.

2. Spikesetzwerkzeug (10) nach Anspruch 1, wobei mindestens das erste Ende (11a) des Körpers (11) des Spikesetzwerkzeugs (10) kreisförmig ist und der Verriegelungsabschnitt (17) des Körpers (11) als eine umlaufende Nut (17) angeordnet ist.

3. Spikesetzwerkzeug (10) nach Anspruch 2, wobei das erste Ende (11a) des Körpers (11) des Spikesetzwerkzeugs (10) mindestens eine Positionierausnehmung (18a, 18b, ..., 18n) umfasst, die an einem äußeren Umfang des kreisförmigen ersten Endes (11a) des Körpers (11) angeordnet ist.

4. Spikesetzwerkzeug (10) nach Anspruch 3, wobei die Positionierausnehmungen (18a, 18b, ..., 18n) des Spikesetzwerkzeugs (10) auf einer zweiten Seite (10b) des Spikesetzwerkzeugs (10) angeordnet sind, die der ersten Seite (10a) des Spikesetzwerkzeugs (10) im Wesentlichen gegenüberliegt.

5. Spikesetzwerkzeug (10) nach einem der vorhergehenden Ansprüche, wobei der Körper (11) des Spikesetzwerkzeugs (10) ferner eine Anschlagskante (19) umfasst, die zwischen dem ersten Ende (11a) und dem zweiten Ende (11b) des Spikesetzwerkzeugs (10) angeordnet ist.

6. Spikesetzwerkzeug (10) nach einem der vorhergehenden Ansprüche, wobei der Körper (11) des Spikesetzwerkzeugs (10) ferner mindestens eine Positionierungsmarkierung (19a) umfasst, die an der ersten Seite (10a) des Spikesetzwerkzeugs (10) angeordnet ist.

7. Spikesetzeinheit (1), angeordnet zum Halten mindestens eines Spikesetzwerkzeugs (10) nach einem der vorhergehenden Ansprüche und zum Bewirken, dass ein Spikesetzwerkzeug (10) Antirutschspikes in Spikelöcher einer Lauffläche eines Reifens in einer ersten axialen Richtung (X) treibt, wobei die Spikesetzeinheit (1) Folgendes umfasst:
- eine Kolbenanordnung (3), dazu angeordnet, eine Hin- und Herbewegung eines Kolbens (3a) in der ersten axialen Richtung (X) zu veranlassen,
wobei sich die Drückvorrichtung (15) des Spikesetzwerkzeugs (10) in Kontakt mit dem Kolben (3a) der Kolbenanordnung (3) befindet, wobei der Kolben (3a) dazu angeordnet ist, eine Hin- und Herbewegung der Drückvorrichtung (15) des Spikesetzwerkzeugs (10) zu veranlassen,
**dadurch gekennzeichnet, dass** die Spikesetzeinheit (1) ferner einen Adapter (20) umfasst, der mit der Kolbenanordnung (3) verbunden ist und zur Befestigung des Spikesetzwerkzeugs (10) an der Spikesetzeinheit (1) angeordnet ist, wobei der Adapter (20) ein erstes Durchgangsloch (21) mit einer axialen Richtung umfasst, die der ersten axialen Richtung (X) ähnlich ist, wobei die Drückvorrichtung (15) des Spikesetzwerkzeugs (10) in dem ersten Durchgangsloch (21) des Adapters (20) in der ersten axialen Richtung (X) hin und her bewegbar ist, wobei der Adapter (20) ferner einen ersten Verriegelungsstift (22) umfasst, der relativ zum Adapter (20) in einer zweiten Richtung (Y), die im Wesentlichen eine Querrichtung relativ zu der ersten Richtung (X) ist, zwischen einer Verriegelungsposition und einer Entriegelungsposition bewegbar ist, wobei in der Verriegelungsposition der erste Verriegelungsstift (22) angeordnet ist, um mit dem Verriegelungsabschnitt (17) des Spikesetzwerkzeugs (10) in Eingriff zu kommen, um das Spikesetzwerkzeug (10) mit dem Adapter (20) zu verriegeln, und wobei in der Entriegelungsposition der erste Verriegelungsstift (22) angeordnet ist, um sich aus dem Eingriff mit dem Verriegelungsabschnitt (17) des Spikesetzwerkzeugs (10) zu lösen, um das Spikesetzwerkzeug vom Adapter (20) zu entriegeln.

8. Spikesetzeinheit (1) nach Anspruch 7, wobei der Adapter (20) einen zweiten Hohlraum (25) umfasst, der sich in der zweiten Richtung (Y) erstreckt, wobei der erste Verriegelungsstift (22) des Adapters (20) in dem zweiten Hohlraum (25) zwischen der Verriegelungsposition und der Entriegelungsposition bewegbar ist.

9. Spikesetzeinheit (1) nach Anspruch 8, wobei der zweite Hohlraum (25) so angeordnet ist, dass er einen Teil eines äußeren Umfangs (21a) des ersten Durchgangslochs (21) schneidet.

10. Spikesetzeinheit (1) nach Anspruch 9, wobei der erste Verriegelungsstift (22) mindestens einen ersten Teil (22a, 22c) mit einer ersten Breite umfasst, wobei der erste Teil (22a, 22c) in der Verriegelungsposition des ersten Verriegelungsstifts (22) mit dem Verriegelungsabschnitt (17) des Spikesetzwerkzeugs (10) interferiert, wobei der erste Verriegelungsstift (22) ferner einen zweiten Teil (22b) mit einer zweiten Breite umfasst, die kleiner als die erste Breite ist, wobei der zweite Teil (22b) in der Entriegelungsposition des ersten Verriegelungsstifts (22) nicht mit dem Verriegelungsabschnitt (17) des Spikesetzwerkzeugs (10) interferiert.

11. Spikesetzeinheit (1) nach einem der Ansprüche 7 - 10, wobei in der Entriegelungsposition der erste Verriegelungsstift (22) angeordnet ist, um eine Drehung des Spikesetzwerkzeugs (10) um die erste axiale Richtung (X) zu ermöglichen.

12. Spikesetzeinheit (1) nach einem der Ansprüche 7 - 11, wobei das erste Durchgangsloch (21) des Adapters (20) kreisförmig ist und angeordnet ist, um das erste Ende (11a) des Körpers (11) des Spikesetzwerkzeugs (10) aufzunehmen.

13. Spikesetzeinheit (1) nach einem der Ansprüche 7 - 12, wobei der erste Verriegelungsstift (22) eine Feder (23) umfasst, die dazu angeordnet ist, den ersten Verriegelungsstift (22) mittels einer Federkraft der Feder (23) in die zweite Richtung (Y) von der Entriegelungsposition in die Verriegelungsposition zu drücken.

14. Spikesetzeinheit (1) nach einem der Ansprüche 7 - 13, wobei der Adapter (20) ferner einen zweiten Verriegelungsstift (26) umfasst, der an einem Rand (21b) des ersten Durchgangslochs (21) angeordnet ist, und wobei der zweite Verriegelungsstift (26) radial von dem Rand (21b) in Richtung zu einer Mitte des ersten Durchgangslochs (21) herausragt, wobei der zweite Verriegelungsstift (26) dazu angeordnet ist, mit einer der Positionierausnehmungen (18a, 18b, ..., 18n) des Spikesetzwerkzeugs (10) in Eingriff zu kommen, wenn eine der Positionierausnehmungen (18a, 18b, ..., 18n) mit dem zweiten Verriegelungsstift (26) ausgerichtet ist.

15. Spikesetzanordnung, **dadurch gekennzeichnet, dass** die Spikesetzanordnung mindestens eine Spikesetzeinheit (1) nach einem der Ansprüche 7 bis 14 umfasst.

## Revendications

1. Outil de cloutage (10) conçu pour entraîner des clous antidérapants dans des trous à clou d'une bande de roulement d'un pneu dans une première direction axiale (X), l'outil de cloutage (10) comprenant :
un corps (11) s'étendant dans la première direction axiale (X), lequel corps (11) comprend une première extrémité (11a) et une seconde extrémité (11b) opposée,
une sortie (12) située au niveau de la seconde extrémité (11b) du corps (11), laquelle sortie (12) est conçue pour éjecter un clou hors de l'outil de cloutage (10) dans la première direction axiale (X),
un agencement de griffes (13) disposé au niveau de la sortie (12) et conçu pour guider un clou éjecté de la sortie (12) et positionner le clou dans un trou à clou d'un pneu,
une première cavité (14) ménagée dans le corps (11) et s'étendant dans la première direction axiale (X), de la première extrémité (11a) à la seconde extrémité (11b) du corps (11), laquelle première cavité (14) est conçue pour guider un clou vers la sortie (12),
un poussoir (15) mobile dans la première cavité (14) et conçu pour pousser un clou hors de la première cavité (14) en réponse au mouvement alternatif agissant sur le poussoir (15),
une entrée (16) conçue pour introduire des clous dans la première cavité (14) à partir d'un premier côté (10a) de l'outil de cloutage (10), l'entrée (16) comprenant une ouverture (16a) qui se termine dans la première cavité (14),
**caractérisé en ce que** l'outil de cloutage (10) comprend en outre au moins une partie de verrouillage (17) située dans le corps (11) de l'outil de cloutage (10), laquelle au moins une partie de verrouillage (17) est conçue pour venir en prise avec une première goupille de verrouillage (22) d'une unité de cloutage (1), pour verrouiller l'outil de cloutage (10) sur une unité de cloutage (1).

2. Outil de cloutage (10) selon la revendication 1, au moins la première extrémité (11a) du corps (11) de l'outil de cloutage (10) étant circulaire et la partie de verrouillage (17) du corps (11) étant conçue sous la forme d'une rainure circonférentielle (17).

3. Outil de cloutage (10) selon la revendication 2, la première extrémité (11a) du corps (11) de l'outil de cloutage (10) comprenant au moins un évidement de positionnement (18a, 18b, ..., 18n) disposé au niveau d'une périphérie extérieure de la première extrémité circulaire (11a) du corps (11).

4. Outil de cloutage (10) selon la revendication 3, les évidements de positionnement (18a, 18b, ..., 18n) de l'outil de cloutage (10) étant situés sur un second côté (10b) de l'outil de cloutage (10) qui est sensiblement opposé au premier côté (10a) de l'outil de cloutage (10).

5. Outil de cloutage (10) selon l'une quelconque des revendications précédentes, le corps (11) de l'outil de cloutage (10) comprenant en outre un bord d'arrêt (19) situé entre la première extrémité (11a) et la seconde extrémité (11b) de l'outil de cloutage (10).

6. Outil de cloutage (10) selon l'une quelconque des revendications précédentes, le corps (11) de l'outil de cloutage (10) comprenant en outre au moins un repère de positionnement (19a) situé sur le premier côté (10a) de l'outil de cloutage (10).

7. Unité de cloutage (1) conçue pour maintenir au moins un outil de cloutage (10) selon l'une quelconque des revendications précédentes et pour amener un outil de cloutage (10) à entraîner des clous antidérapants dans des trous à clou d'une bande de roulement d'un pneu dans une première direction axiale (X), l'unité de cloutage (1) comprenant :
- un agencement de piston (3) conçu pour provoquer un mouvement alternatif d'un piston (3a) vers l'arrière et vers l'avant dans la première direction axiale (X),
le poussoir (15) de l'outil de cloutage (10) étant en contact avec le piston (3a) de l'agencement de piston (3), le piston (3a) étant conçu pour provoquer un mouvement alternatif du poussoir (15) de l'outil de cloutage (10),
**caractérisé en ce que** l'unité de cloutage (1) comprend en outre un adaptateur (20) qui est relié à l'agencement de piston (3) et conçu pour fixer l'outil de cloutage (10) à l'unité de cloutage (1), l'adaptateur (20) comprenant un premier trou traversant (21) doté d'une direction axiale qui est similaire à la première direction axiale (X), le poussoir (15) de l'outil de cloutage (10) étant mobile dans le premier trou traversant (21) de l'adaptateur (20), vers l'arrière et vers l'avant dans la première direction axiale (X), l'adaptateur (20) comprenant en outre une première goupille de verrouillage (22) qui est mobile par rapport à l'adaptateur (20) dans une seconde direction (Y), qui est sensiblement une direction transversale par rapport à la première direction (X), entre une position de verrouillage et une position de déverrouillage, dans la position de verrouillage, la première goupille de verrouillage (22) étant conçue pour venir en prise avec la partie de verrouillage (17) de l'outil de cloutage (10) pour verrouiller l'outil de cloutage (10) sur l'adaptateur (20), dans la position de déverrouillage, la première goupille de verrouillage (22) étant conçue pour se libérer de la prise avec la partie de verrouillage (17) de l'outil de cloutage (10) pour déverrouiller l'outil de cloutage de l'adaptateur (20).

8. Unité de cloutage (1) selon la revendication 7, l'adaptateur (20) comprenant une seconde cavité (25) qui s'étend dans la seconde direction (Y), la première goupille de verrouillage (22) de l'adaptateur (20) étant mobile dans la seconde cavité (25) entre la position de verrouillage et la position de déverrouillage.

9. Unité de cloutage (1) selon la revendication 8, la seconde cavité (25) étant conçue de sorte qu'elle coupe une partie d'une périphérie extérieure (21a) du premier trou traversant (21).

10. Unité de cloutage (1) selon la revendication 9, la première goupille de verrouillage (22) comprenant au moins une première partie (22a, 22c) dotée d'une première largeur, laquelle première partie (22a, 22c) dans la position de verrouillage de la première goupille de verrouillage (22) interfère avec la partie de verrouillage (17) de l'outil de cloutage (10), la première goupille de verrouillage (22) comprenant en outre une seconde partie (22b) dotée d'une seconde largeur qui est inférieure à la première largeur, laquelle seconde partie (22b) dans la position de déverrouillage de la première goupille de verrouillage (22) n'interfère pas avec la partie de verrouillage (17) de l'outil de cloutage (10).

11. Unité de cloutage (1) selon l'une quelconque des revendications 7 à 10, dans la position de déverrouillage, la première goupille de verrouillage (22) étant conçue pour permettre la rotation de l'outil de cloutage (10) autour de la première direction axiale (X).

12. Unité de cloutage (1) selon l'une quelconque des revendications 7 à 11, le premier trou traversant (21) de l'adaptateur (20) étant circulaire et conçu pour recevoir la première extrémité (11a) du corps (11) de l'outil de cloutage (10).

13. Unité de cloutage (1) selon l'une quelconque des revendications 7 à 12, la première goupille de verrouillage (22) comprenant un ressort (23), conçu pour pousser la première goupille de verrouillage (22) dans la seconde direction (Y) de la position de déverrouillage à la position de verrouillage au moyen d'une force de ressort du ressort (23).

14. Unité de cloutage (1) selon l'une quelconque des revendications 7 à 13, l'adaptateur (20) comprenant en outre une seconde goupille de verrouillage (26), qui est située au niveau d'un bord (21b) du premier trou traversant (21) et laquelle seconde goupille de verrouillage (26) fait saillie radialement depuis le bord (21b) en direction d'un centre du premier trou traversant (21), la seconde goupille de verrouillage (26) étant conçue pour venir en prise avec l'un des évidements de positionnement (18a, 18b, ..., 18n) de l'outil de cloutage (10) lorsque l'un des évidements de positionnement (18a, 18b, ..., 18n) est aligné avec la seconde goupille de verrouillage (26).

15. Ensemble de cloutage **caractérisé en ce que** l'ensemble de cloutage comprend au moins une unité de cloutage (1) selon l'une quelconque des revendications 7 à 14.
